# FASCICULE DE BREVET EUROPEEN

(11) **EP 3 302 916 B1**
(45) Date de publication et mention de la délivrance du brevet: **06.08.2025**
(21) Numéro de dépôt: 16719351.5
(22) Date de dépôt: 19.04.2016
(51) Int. Cl.: B29C 45/14

(54) **PROFILÉ CREUX TEL QU'UN TUBE RÉALISÉ EN MATÉRIAUX COMPOSITE THERMODURCISSABLE ET SON PROCÉDÉ**
HOHLPROFILELEMENT WIE Z. B. EIN ROHR AUS WÄRMEHÄRTBAREM VERBUNDWERKSTOFF UND ENTSPRECHENDES VERFAHREN
HOLLOW PROFILE MEMBER SUCH AS A TUBE MADE OF THERMOSETTING COMPOSITE MATERIALS AND CORRESPONDING METHOD

(30) Priorité: 01.06.2015 FR 1554954; 26.06.2015 FR 1555979
(43) Date de publication de la demande: 11.04.2018
(73) Titulaire: Epsilon Composite, 33340 Gaillan en Medoc (FR); Somocap, 64480 Ustaritz (FR)
(72) Inventeur: LULL, Stéphane, 33990 Hourtin (FR); LATRON, Ambroise, 33340 Lesparre-Médoc (FR); SORHOUET, Fabrice, 64240 Briscous les Salines (FR); NADEAU, Jérôme, 64250 Cambo les Bains (FR); CLERC, Thomas, 64100 Bayonne (FR)
(74) Mandataire: Novagraaf Technologies
(86) Numéro de dépôt international: PCT/EP2016/058674
(87) Numéro de publication internationale: WO 2016/192888

(56) Documents cités:
- DE-A1- 102012 018 804
- DE-A1- 102012 021 493

## Description

L'invention se rapporte à un profilé creux tel qu'un tube réalisé en matériaux composite thermodurcissable préférentiellement constitué de fibres de carbone, sur lequel on surmoule un embout réalisé en matériaux thermoplastique ou en matériau composite thermoplastique pour la réalisation d'une pièce telle qu'une bielle, dans ce cas les deux extrémités seront surmoulées.

Ce type de pièce est soumis à des efforts importants à la fois en traction et en compression, mais également en vibration en torsion et en température notamment dans le cas des bielles utilisées pour les secteurs industriels et aéronautiques. Il est donc nécessaire que la liaison entre le profilé et l'embout surmoulé soit suffisamment résistante. L'effort de traction auquel elle doit résister est supérieur à 1tonne avec un gradient de température jusqu'à 140°pour une section de profilé de diamètre ou de largeur maximum de 15mm. Les deux matériaux (carbone thermodurcissable et bouchon et embout thermoplastiques ont des coefficients de dilatation différents et les écarts de température induisent des risques de désolidarisation des deux matériaux et donc un risque d'accident.

On connait un procédé de soudage chimique de deux pièces thermoplastiques tel que décrit dans le brevet DE 10 2012 021 493, où les pièces thermoplastiques sont chauffées et pressées ensemble de façon à créer une zone de soudure chimique entre les deux pièces, voire pour reformer à chaud les pièces afin de réaliser un relief permettant d'augmenter le tenue des deux pièces ensemble. Mais ce procédé n'est pas applicable à une tube thermodurcissable qui n'est ni reformable ni apte à se mélanger à un thermoplastique pour réaliser une soudure chimique.

L'objet de l'invention est de proposer une bielle et un procédé de fabrication de la bielle qui permettent de répondre à ces problèmes.

Le procédé de surmoulage d'un embout thermoplastique sur un profilé creux en composite thermodurcissable pour la réalisation d'une bielle selon l'invention est défini par la revendication 1.

Ce procédé est simple car il nécessite peu d'étapes mais il permet d'obtenir des ensembles résistant à de fortes traction, compression, gradient de température et avec des matériaux de coefficients de dilatation différents. Le bouchon aura une longueur supérieure ou égale à la longueur de la zone d'injection afin de résister à la pression d'injection exercée sur les parois du profilé. Le profilé pourra être en carbone thermodurcissable pultrudé ou non. Il pourra par exemple être réalisé selon un procédé de pultrusion tel que décrit dans le brevet EP 1 774 216. L'usinage est réalisé à l'extérieur du profilé mais un deuxième usinage à l'intérieur peut aussi être envisagé. La forme de l'embout sera adaptée pour permettre un raccordement avec les structures périphériques de bielles. L'usinage de forme du profilé va permettre la liaison mécanique du profilé et de l'embout, en effet le profilé thermodurcissable n'étant pas déformable à la différence d'un thermoplastique, ce sont les formes usinés sur le profilé qui vont permettre de tenir l'embout.

Avantageusement, le procédé comprend une étape de traitement chimique du profilé dans la zone d'injection. Ce traitement chimique après l'usinage du profilé dans la partie usinée du profilé peut consister à l'utilisation d'un solvant, d'un adhésif ou d'un agent mouillant. Ce traitement va améliorer la liaison entre le profilé et l'embout.

De façon optionnelle, le procédé comprend une étape de traitement laser du profilé dans la zone d'injection.

Selon une première variante, le positionnement du bouchon se fait directement sur le profilé. Le bouchon est placé dans le profilé avant son placement dans l'outil d'injection. Dans ce cas le bouchon aura de préférence un rebord périphérique.

Selon une deuxième variante, le positionnement du bouchon se fait en le positionnant dans un outil d'injection puis en installant le profilé dans l'outil d'injection. Dans ce cas, le bouchon pourra être creux et fileté pour être maintenu dans l'outil, il suffira alors d'insérer le profilé autour du bouchon.

Le bouchon pourra être par exemple en matière polymère comme un thermoplastique, en matière métallique comme de l'aluminium ou du titane et une combinaison de deux.

L'invention concerne également une bielle telle que définie par la revendication 6. La bielle est réalisée à partir d'un profilé creux qui peut être de forme tubulaire (avec un profil circulaire, carré, rectangulaire, triangulaire, de forme évasée ou non, etc...) et sur lequel un embout thermoplastique, composite ou non, est surmoulé. Le bouchon est placé dans le profilé du coté surmoulé afin d'éviter que le profilé ne se remplisse. Le bouchon présente au moins une partie de son profil extérieur complémentaire du profil intérieur du profilé et de taille sensiblement identique afin de le boucher. Le bouchon a une longueur supérieure ou égale à la longueur de la partie surmoulé du profilé surmoulé et de l'embout. Il a ainsi une double fonction de fermer le profilé et de reprendre les efforts radiaux exercés lors de l'injection sur les parois du profilé. Le profilé reste donc en grande partie vide, ce qui permet d'obtenir une pièce de faible poids, de coûts réduits car il y a moins de matière. Le profilé pourra être réalisé en carbone thermodurcissable et être obtenu par pultrusion.

Selon une disposition particulière, la partie usinée du profilé est percée. Ces trous vont permettre au matériau thermoplastique d'entrer dans le profilé jusqu'à atteindre le bouchon, ce qui améliore la tenue de l'ensemble. Dans ce cas, un usinage interne au profilé est intéressant car la surface de contact du matériau thermoplastique avec le profilé est alors plus importante.

Selon une deuxième variante, la partie usinée du profilé présente des sillons ou des gorges circulaires hélicoïdales ou non. Ces sillons pourront avoir différents profils: en V, carré, pentagonal, arrondi, etc.... Il est aussi possible de prévoir un seul évidement.

Selon une troisième variante, la partie usinée du profilé a reçu un traitement laser. Le traitement laser permet de réaliser des stries de très petites dimensions.

Il est possible de prévoir une liaison chimique en plus sur la partie usinée du profilé.

Selon une caractéristique particulière, le bouchon a un diamètre extérieur d₁ inférieur au diamètre intérieur D₁ du profilé sur une portion de sa longueur. Ceci laisse un espace entre le profilé et le bouchon où le matériau thermoplastique pourra entrer si le profilé est perforé ou, où le profilé pourra subir une légère déformation lors de l'injection du matériau thermoplastique.

Selon une autre caractéristique particulière, le bouchon présente un bord périphérique de diamètre d₂ supérieur au diamètre extérieur D₂ du profilé. Ceci lui permet de tenir sur le bord du profilé et éviter de s'enfoncer dans le profilé lors de l'injection de thermoplastique.

Le bouchon peut présenter des parties de dimensions inférieures à celles de l'intérieur du profilé et dans ce cas il sera tenu lors de l'injection dans l'outil d'injection luimême.

D'autres avantages pourront encore apparaître à l'homme du métier à la lecture des exemples ci-dessous, illustrés par les figures annexées, donnés à titre d'exemple:
- La figure 1 est un premier exemple de profilé selon l'invention,
- La figure 2 représente un deuxième exemple de profilé selon l'invention,
- La figure 3 est un troisième exemple de profilé selon l'invention,
- La figure 4 est une coupe d'un premier mode de réalisation de l'ensemble avant l'injection selon l'invention,
- La figure 5 est une coupe d'un deuxième mode de réalisation de l'ensemble avant l'injection selon l'invention,
- La figure 6 est une vue en coupe partielle de l'ensemble de la figure 4 après l'injection,
- La figure 7 est une vue en coupe d'un ensemble après l'injection.

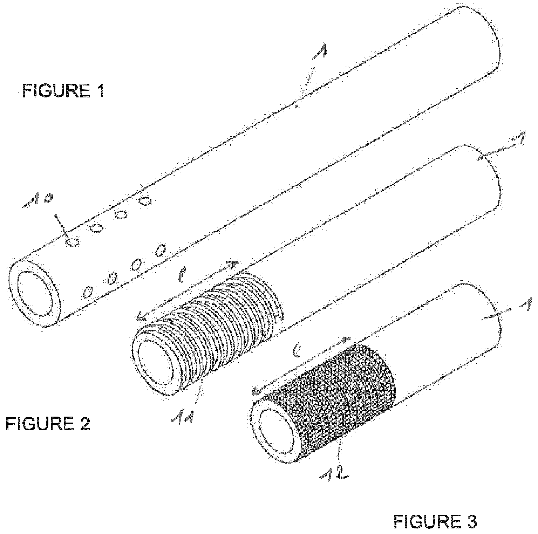

Le profilé 1 illustré en figure 1 est un tube creux en matériau composite thermodurcissable, par exemple du carbone thermodurcissable, réalisé ou non par pultrusion, avec une extrémité usinée avec des trous 10. Ces trous 10 vont permettre le passage du matériau thermoplastique à l'intérieur du profilé 1.

A la figure 2 le profilé 1 a une extrémité avec des sillons 11. La longueur l du la partie avec des sillons sera de préférence sensiblement de la même longueur que la zone d'injection 13 du matériau thermoplastique.

Sur la figure 3, le profilé 1 a une extrémité avec des aspérités 12, elles pourront être réalisées par usinage ou par laser. La surface des aspérités sera de préférence sensiblement de la même longueur l que la zone d'injection 13 du matériau thermoplastique. D'autres formes de surfaces sont aussi possibles.

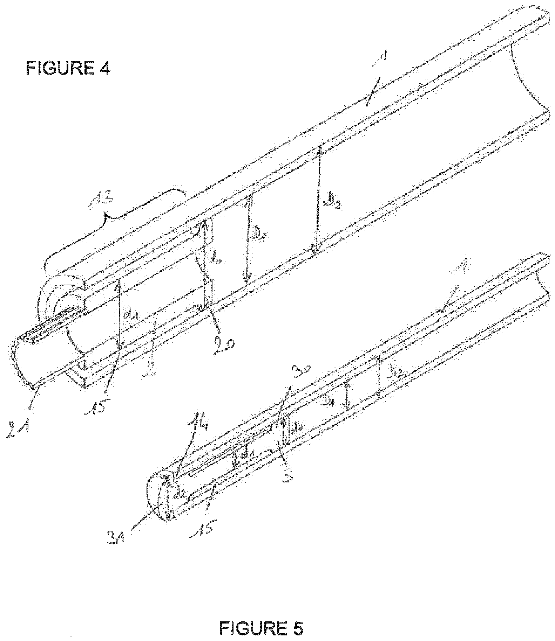

On voit à la figure 4 une coupe d'un profilé en matériau composite thermodurcissable avec un premier type de bouchon 2 en matériau thermoplastique ou matériau métallique ou une combinaison des deux matériaux, inséré dans le profilé 1 sous la zone d'injection 13 correspondant à la partie du profilé 1 comprenant l'extrémité usinée ou avec des sillons ou des aspérités. Le bouchon 2 comprend un bout 20 dont le diamètre d₀ est sensiblement égal au diamètre intérieur D1 du profilé 1 afin d'assurer l'étanchéité du profilé 1 au matériau thermoplastique qui sera injecté en bouchant l'ouverture. Ici le bouchon 2 sera maintenu par l'outil d'injection dans le profilé 1, par exemple par un filetage intérieur (non représenté). Il reste un espace 15 entre le profilé 1 et le bouchon 2.

Dans la figure 5, c'est une coupe d'un tube en matériau composite thermodurcissable avec un deuxième type de bouchon 3 en matériau thermoplastique ou matériau métallique ou une combinaison des deux matériaux, avec un bout 30 de diamètre d₀ sensiblement égal au diamètre intérieur D₁ du profilé 1 et un bord périphérique 31 de diamètre d₂ supérieur au diamètre extérieur D₂ dudit profilé 1 et en appui sur son extrémité 14. C'est le bord périphérique 31 qui maintient le bouchon 3 au bout du profilé 1. Il reste un espace 15 entre le profilé 1 et le bouchon 3.

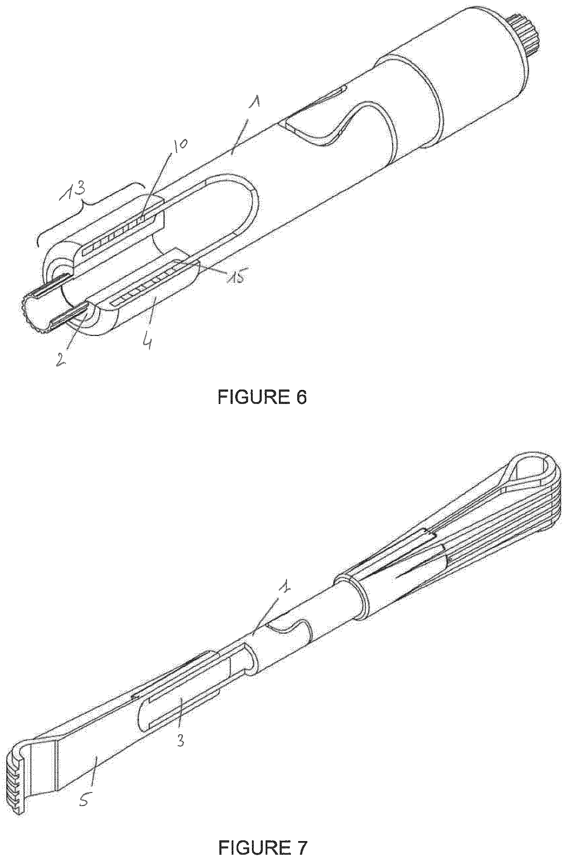

La figure 6 montre la coupe partielle du profilé 1 de la figure 1 avec un bouchon 2 du premier type après l'injection du matériau thermoplastique constituant l'embout 4. Le matériau thermoplastique est entré dans les trous 10 pour remplir l'espace 15 ce qui permet une meilleure adhérence de l'embout 4 sur le profilé 1.

La figure 7 est une coupe d'un profilé de la figure 1 avec un bouchon 3 du deuxième type après l'injection de l'embout 5. Le matériau thermoplastique constituant l'embout 5 a été moulé autour du profilé 1 dans la partie usinée.

La mise en œuvre du procédé selon l'invention se passe de la façon suivante: on part d'un profilé 1, on réalise un usinage tel que celui des figures 1 à 3, puis on insère un bouchon 2 dans l'outil d'injection par exemple par vissage sur un élément de l'outil, puis le profilé 1 dans l'outil d'injection comme sur la figure 4, ou, on place le bouchon 3 dans le profilé 1 comme à la figure 5 pour ensuite le placer dans l'outil d'injection, on met en condition thermique de l'assemblage du profilé 1 et du bouchon 2 ou 3 dans ledit outil d'injection, puis on réalise l'injection du matériau thermoplastique dans un moule de la forme de l'embout 4 ou 5. Selon la forme de l'usinage du profilé, le matériau thermoplastique va entrer dans les trous 10, ou les sillons 11, ou entre les aspérités 12.

Bien entendu, on réalisera un embout à chaque extrémité du profilé 1 pour réaliser une bielle.

## Revendications

1. Procédé de surmoulage d'un embout thermoplastique (4, 5) sur un profilé (1) creux en composite thermodurcissable pour la réalisation d'une bielle, **caractérisé en ce qu'**il présente les étapes suivantes:
- usinage de forme du profilé (1) en composite thermodurcissable sur une zone d'injection (13), l'usinage étant réalisé à l'extérieur du profilé (1),
- positionnement d'un bouchon (2, 3) dans le profilé (1), le bouchon (2, 3) ayant une longueur supérieure ou égale à la longueur de la zone d'injection (13) afin de résister à la pression d'injection exercée sur les parois du profilé (1),
- mise en condition thermique de l'assemblage du profilé (1) et du bouchon (2, 3),
- injection en composite thermoplastique de l'embout (4, 5) pour création d'une jonction du profilé (1), du bouchon (2, 3) et de l'embout (4, 5), pour réaliser la bielle,
l'usinage de forme du profilé (1) permettant la liaison mécanique du profilé (1) et de l'embout (4, 5), les formes usinées sur le profilé (1) permettant de tenir l'embout (4, 5).

2. Procédé selon la revendication 1, **caractérisé en ce qu'**il comprend une étape de traitement chimique du profilé (1) dans la zone d'injection (13).

3. Procédé selon une des revendications précédentes, **caractérisé en ce qu'**il comprend une étape de traitement laser du profilé (1) dans la zone d'injection (13).

4. Procédé selon une des revendications précédentes, **caractérisé en ce que** le positionnement du bouchon (3) se fait directement sur le profilé (1).

5. Procédé selon une des revendications 1 à 3, **caractérisé en ce que** le positionnement du bouchon (2) se fait en le positionnant dans un outil d'injection puis en installant le profilé (1) dans l'outil d'injection.

6. Bielle comprenant un profilé (1) creux en composite thermodurcissable de diamètre intérieur D₁ et de diamètre extérieur D₂ et un embout (4, 5) thermoplastique, **caractérisée en ce qu'**elle comprend un bouchon (2, 3) disposé à l'intérieur du profilé (1) et que le profilé (1) comprend une partie usinée à une extrémité du profilé (1) sur une zone d'injection (13), l'usinage étant réalisé à l'extérieur du profilé (1), le bouchon (2, 3) ayant une longueur supérieure ou égale à la longueur de la zone d'injection (13) afin de résister à la pression d'injection exercée sur les parois du profilé (1), l'usinage de forme du profilé (1) permettant la liaison mécanique du profilé (1) et de l'embout (4, 5), les formes usinées sur le profilé (1) permettant de tenir l'embout (4, 5).

7. Bielle selon la revendication précédente, **caractérisée en ce que** la partie usinée du profilé (1) est percée.

8. Bielle selon la revendication 6, **caractérisée en ce que** la partie usinée du profilé (1) a reçu un traitement laser.

9. Bielle selon la revendication 7, **caractérisée en ce que** le bouchon (2, 3) a un diamètre extérieur d₁ inférieur au diamètre intérieur D₁ du profilé (1) sur une portion de sa longueur.

10. Bielle selon l'une des revendications 6 à 9, **caractérisée en ce que** le bouchon (3) présente un bord périphérique de diamètre d₂ supérieur au diamètre extérieur D₂ du profilé (1) .

## Patentansprüche

1. Verfahren zum Überspritzen eines thermoplastischen Endstücks (4, 5) auf ein Hohlprofil (1) aus duroplastischem Verbundwerkstoff zur Herstellung einer Pleuelstange, **dadurch gekennzeichnet, dass** es die folgenden Schritte umfasst:
- Formbearbeitung des Profils (1) aus duroplastischem Verbundwerkstoff in einem Einspritzbereich (13), wobei die Bearbeitung an der Außenseite des Profils (1) durchgeführt wird,
- Positionierung eines Stopfens (2, 3) im Profil (1), wobei der Stopfen (2, 3) eine Länge hat, die größer oder gleich der Länge des Einspritzbereichs (13) ist, um dem auf die Wände des Profils (1) ausgeübten Einspritzdruck standzuhalten,
- thermische Konditionierung der Baugruppe aus Profil (1) und Stopfen (2, 3),
- Einspritzen des thermoplastischen Verbundwerkstoffs für das Endstück (4, 5) zur Herstellung einer Verbindung zwischen Profil (1), Stopfen (2, 3) und Endstück (4, 5), um die Pleuelstange herzustellen,
wobei die Formbearbeitung des Profils (1) die mechanische Verbindung des Profils (1) und des Endstücks (4, 5) ermöglicht, wobei die am Profil (1) bearbeiteten Formen es ermöglichen, das Endstück (4, 5) zu halten.

2. Verfahren nach Anspruch 1, **dadurch gekennzeichnet, dass** es einen Schritt der chemischen Behandlung des Profils (1) im Einspritzbereich (13) umfasst.

3. Verfahren nach einem der vorhergehenden Ansprüche, **dadurch gekennzeichnet, dass** es einen Schritt der Laserbehandlung des Profils (1) im Einspritzbereich (13) umfasst.

4. Verfahren nach einem der vorhergehenden Ansprüche, **dadurch gekennzeichnet, dass** die Positionierung des Stopfens (3) direkt am Profil (1) erfolgt.

5. Verfahren nach einem der Ansprüche 1 bis 3, **dadurch gekennzeichnet, dass** die Positionierung des Stopfens (2) durch Platzieren in einem Einspritzwerkzeug und anschließendes Einsetzen des Profils (1) in das Einspritzwerkzeug erfolgt.

6. Pleuelstange, umfassend ein Hohlprofil (1) aus duroplastischem Verbundwerkstoff mit einem Innendurchmesser D₁ und einem Außendurchmesser D₂ sowie ein thermoplastisches Endstück (4, 5), **dadurch gekennzeichnet, dass** sie einen Stopfen (2, 3) umfasst, der im Inneren des Profils (1) angeordnet ist, und dass das Profil (1) einen bearbeiteten Teil an einem Ende des Profils (1) in einem Einspritzbereich (13) aufweist, wobei die Bearbeitung an der Außenseite des Profils (1) durchgeführt wird, wobei der Stopfen (2, 3) eine Länge hat, die größer oder gleich der Länge des Einspritzbereichs (13) ist, um dem auf die Wände des Profils (1) ausgeübten Einspritzdruck standzuhalten, wobei die Formbearbeitung des Profils (1) die mechanische Verbindung des Profils (1) und des Endstücks (4, 5) ermöglicht, wobei die am Profil (1) bearbeiteten Formen es ermöglichen, das Endstück (4, 5) zu halten.

7. Pleuelstange nach dem vorhergehenden Anspruch, **dadurch gekennzeichnet, dass** der bearbeitete Teil des Profils (1) durchbohrt ist.

8. Pleuelstange nach Anspruch 6, **dadurch gekennzeichnet, dass** der bearbeitete Teil des Profils (1) einer Laserbehandlung unterzogen wurde.

9. Pleuelstange nach Anspruch 7, **dadurch gekennzeichnet, dass** der Stopfen (2, 3) einen Außendurchmesser d₁ hat, der kleiner als der Innendurchmesser D₁ des Profils (1) auf einem Teil seiner Länge ist.

10. Pleuelstange nach einem der Ansprüche 6 bis 9, **dadurch gekennzeichnet, dass** der Stopfen (3) einen peripheren Rand mit einem Durchmesser d₂ aufweist, der größer als der Außendurchmesser D₂ des Profils (1) ist.

## Claims

1. Method for overmolding a thermoplastic end fitting (4, 5) onto a hollow profile (1) made of thermoset composite for manufacturing a connecting rod, **characterised in that** the method comprises the following steps:
- shape machining of the thermoset composite profile (1) on an injection zone (13), the machining being performed on the exterior of the profile (1),
- positioning a plug (2, 3) in the profile (1), the plug (2, 3) having a length greater than or equal to the length of the injection zone (13) to withstand the injection pressure exerted on the walls of the profile (1),
- thermal conditioning of the assembly of the profile (1) and the plug (2, 3),
- injection molding of the thermoplastic end fitting (4, 5) to create a junction between the profile (1), the plug (2, 3), and the end fitting (4, 5), to produce the connecting rod,
the shape machining of the profile (1) allowing for the mechanical connection of the profile (1) and the end fitting (4, 5), the machined shapes on the profile (1) enabling the retention of the end fitting (4, 5).

2. Method according to claim 1, **characterised in that** it comprises a step of chemical treatment of the profile (1) in the injection zone (13).

3. Method according to any of the preceding claims, **characterised in that** it comprises a step of laser treatment of the profile (1) in the injection zone (13).

4. Method according to any of the preceding claims, **characterised in that** the positioning of the plug (3) is done directly on the profile (1).

5. Method according to any of claims 1 to 3, **characterised in that** the positioning of the plug (2) is done by placing it in an injection tool and then installing the profile (1) in the injection tool.

6. Connecting rod comprising a hollow profile (1) made of thermoset composite with an inner diameter D₁ and an outer diameter D₂, and a thermoplastic end fitting (4, 5), **characterised in that** it includes a plug (2, 3) disposed inside the profile (1) and that the profile (1) comprises a machined part at one end of the profile (1) on an injection zone (13), the machining being performed on the exterior of the profile (1), the plug (2, 3) having a length greater than or equal to the length of the injection zone (13) in order to withstand the injection pressure exerted on the walls of the profile (1), the shape machining of the profile (1) allowing for the mechanical connection of the profile (1) and the end fitting (4, 5), the machined shapes on the profile (1) enabling the retention of the end fitting (4, 5).

7. Connecting rod according to the preceding claim, **characterised in that** the machined part of the profile (1) is perforated.

8. Connecting rod according to claim 6, **characterised in that** the machined part of the profile (1) has received a laser treatment.

9. Connecting rod according to claim 7, **characterised in that** the plug (2, 3) has an outer diameter d₁ smaller than the inner diameter D₁ of the profile (1) over a portion of its length.

10. Connecting rod according to any of claims 6 to 9, **characterised in that** the plug (3) has a peripheral edge with a diameter d₂ greater than the outer diameter D₂ of the profile (1).
